# EUROPÄISCHE PATENTANMELDUNG

(11) **EP 2 918 360 A1**
(43) Veröffentlichungstag der Anmeldung: **16.09.2015**
(21) Anmeldenummer: 15158525.4
(22) Anmeldetag: 10.03.2015
(51) Int. Cl.: B23B 51/02, B24B 3/26

(54) **ROTATIONSWERKZEUG, INSBESONDERE BOHRWERKZEUG SOWIE VERFAHREN ZUR HERSTELLUNG EINES ROTATIONSWERKZEUGES**

(30) Priorität: 13.03.2014 DE 102014204700
(71) Anmelder: Kennametal Inc., Latrobe, PA 15650-0231 (US)
(72) Erfinder: Kauper, Herbert Rudolf, 91056 Erlangen (DE); Schwägerl, Jürgen, 92648 Vohenstrauß (DE)
(74) Vertreter: FDST Patentanwälte

(57) **Zusammenfassung**

Das Rotationswerkzeug, insbesondere Bohrwerkzeug, erstreckt sich entlang einer Längsachse (8) und weist eine Stirnfläche (14), eine Zentrumsspitze (20) und zumindest eine sich nach außen bis zu einem Scheideck (22) erstreckenden Hauptschneide (16) auf. An die Hauptschneide (16) schließt sich ein erster Freiflächenabschnitt (32) und an diesen wiederum ein zweiter Freiflächenabschnitt (34) an. Um die Belastung, insbesondere den Verschleiß, im Bereich der Stirnfläche (14) gering zu halten, weist der erste Freiflächenabschnitt (32) eine geringere mittlere Rauheit (Rₐ) auf als der zweite Freiflächenabschnitt (34).

## Beschreibung

### Hintergrund der Erfindung

Die Erfindung betrifft ein Rotationswerkzeug, insbesondere ein Bohrwerkzeug, welches sich entlang einer Längsachse erstreckt und eine vorderen Stirnfläche aufweist mit einer Zentrumsspitze, mit einer sich nach außen bis zu einem äußeren Schneideck erstreckenden Hauptschneide sowie mit einem sich an die Hauptschneide anschließenden ersten Freiflächenabschnitt und mit einem sich an diesen anschließenden zweiten Freiflächenabschnitt.

Ein derartiges Rotationswerkzeug ist beispielsweise aus der US 4,759,667 zu entnehmen. Ein Bohrwerkzeug mit einem so genannten Vierflächenanschliff ist weiterhin beispielsweise auch aus der US 4,983,079 zu entnehmen.

Die Stirnfläche derartiger Bohrer mit einem Mehrflächenanschliff weist üblicherweise anschließend an die jeweilige Hauptschneide in Drehrichtung einen ersten Freiflächenabschnitt auf, welcher unter einem ersten Freiwinkel orientiert ist. An diesen schließt sich der zweite Freiflächenabschnitt an, welcher unter einem größeren Freiwinkel orientiert ist. Bei dem aus der US 4,983,079 zu entnehmenden Spiralbohrer verläuft der erste Freiflächenabschnitt dabei jeweils entlang der gesamten Hautschneide. Zwei Hauptschneiden sind dabei über eine Querschneide miteinander verbunden. Zur Verbesserung der Schneideigenschaften ist gemäß der US 4,759,667 der erste Freiflächenabschnitt in etwa dreieckförmig ausgebildet mit zunehmender Breite zum Umfang des Bohrwerkzeugs. Der erste Freiflächenabschnitt beginnt hierbei nicht an der Zentrumsspitze wie beim herkömmlichen Vierflächenanschliff, sondern radial beabstandet hiervon am Ende der Querschneide.

Aufgrund der durch das Schleifen ausgebildeten Kante im Übergang zwischen den beiden Freiflächenabschnitten treten an dieser Kante häufig mechanische Belastungen auf. Zur Vermeidung derartiger mechanischer Belastungen ist beispielsweise gemäß der EP 1 230 058 B1 eine Bohrerspitze ausgebildet, bei der die Freifläche als eine von der Hauptschneide in Richtung zur Spannut kantenfrei gekrümmte Oberfläche ausgebildet ist.

### Aufgabe der Erfindung

Ausgehend hiervon liegt der Erfindung die Aufgabe zugrunde, ein Rotationswerkzeug, insbesondere Bohrwerkzeug, mit verbesserten Eigenschaften, insbesondere mit einem verbesserten Verschleißverhalten, anzugeben.

### Lösung der Aufgabe

Die Aufgabe wird erfindungsgemäß gelöst durch ein Rotationswerkzeug mit den Merkmalen des Anspruchs 1 sowie durch ein Verfahren zur Herstellung eines derartigen Rotationswerkzeugs mit den Merkmalen des Anspruchs 9. Das Rotationswerkzeug, insbesondere ein Bohrwerkzeug, erstreckt sich dabei entlang einer Längsachse und weist eine vordere Stirnfläche auf, die eine auf der Längsachse liegende Zentrumsspitze umfasst. Entlang einer Kante der Stirnfläche verläuft in etwa radialer Richtung eine Hauptschneide bis zu einem äußeren Schneideck des Bohrwerkzeugs. Üblicherweise sind zumindest zwei Hauptschneiden ausgebildet, die über eine Querschneide miteinander verbunden sind. Die Querschneide quert dabei einen Bohrkern des Rotationswerkzeugs und kreuzt die Zentrumsspitze. Ähnlich wie bei einem herkömmlichen Vierflächenanschliff schließt sich in Umfangsrichtung an die Hauptschneide ein erster Freiflächenabschnitt und an diesen wiederum ein zweiter Freiflächenabschnitt an. Die beiden Freiflächenabschnitte gehen daher ineinander über. Zur Reduzierung der bei der Schneidoperation auftretenden Schneidkräfte ist nunmehr vorgesehen, dass der erste Freiflächenabschnitt eine geringere mittlere Rauheit im Vergleich zu dem zweiten Freiflächenabschnitt aufweist. Herstellungstechnisch wird dies erfindungsgemäß im Rahmen des Verfahrens dadurch gelöst, dass die beiden Freiflächenabschnitte mit unterschiedlichen Schleifscheiben geschliffen werden, wobei sich die Schleifscheiben insbesondere im Hinblick auf ihre Körnung unterscheiden.

Diese Ausgestaltung beruht auf der Überlegung, dass beim Zerspanen unmittelbar im Anschluss an die Hauptschneide hohe Reibungskräfte im Bereich des ersten Freiflächenabschnitts auftreten, welche zu einem hohen Verschleiß und insgesamt zu einer hohen mechanischen Belastung des Bohrwerkzeugs führen können. Durch die Ausbildung des ersten Freiflächenabschnitts mit einer verbesserten Oberflächengüte, also einer geringeren Rauheit, wird gezielt an dieser hochbelasteten Stelle im Anschluss an die Hauptschneiden die Reibbelastung und damit die mechanische Belastung sowie der Verschleiß reduziert.

Zweckdienlicherweise ist dabei vorgesehen, dass die mittlere Rauheit des ersten Freiflächenabschnitts kleiner 0,1 µm ist. Gleichzeitig ist die mittlere Rauheit des zweiten Freiflächenabschnitts größer 0,1 µm und liegt insbesondere im Bereich von 0,1 µm bis 0,4 µm. Durch diese Rauheitswerte ist auf der einen Seite ein ökonomisches Herstellverfahren gewährleistet, bei dem ausreichend hohe Schleifgeschwindigkeiten ermöglicht sind, wobei gleichzeitig eine hohe Oberflächengüte der ersten Freiflächenabschnitte gewährleistet ist. Die Körnung der verwendeten unterschiedlichen Schleifscheiben ist korrespondierend zu diesen mittleren Rauheiten gewählt.

In besonders bevorzugter Ausgestaltung beginnt der erste Freiflächenabschnittin radialer Richtung betrachtet - beabstandet von der Zentrumsspitze, insbesondere im Anschluss an die Querschneide. Durch diese Maßnahme wird der besondere Vorteil erzielt, dass sich ein dem ersten Freiflächenabschnitt zugeordneter Freiwinkel von einem Freiwinkel im Bereich des Zentrums unterscheiden kann und diese Freiwinkel daher unabhängig voneinander eingestellt werden können. Bei einem herkömmlichen Schleifen mit einer üblicherweise die gesamte radiale Länge ausgehend vom Zentrum überdeckenden Schleifscheibe ist eine Entkopplung des Freiwinkels im zentrumsnahen Bereich von dem Freiwinkel im zentrumsfernen Bereich üblicherweise nicht ohne Weiteres möglich. Im zentrumsnahen Bereich ist dabei ein vergleichsweise großer Freiwinkel erforderlich, da im zentrumsnahen Bereich die Stirnfläche pro Drehwinkel einen vergleichsweise hohen Höhenversatz in Längsrichtung, also eine große Steigung, aufweist.

In weiterhin bevorzugter Ausgestaltung schließt sich dabei der erste Freiflächenabschnitt erst an einem zentrumsfernen Bereich der Hauptschneide, also - in radialer Richtung betrachtet - beabstandet von der Querschneide an. In einem zentrumsnahen Abschnitt der Hauptschneide schließt sich der erste Freiflächenabschnitt also noch nicht an die Hauptschneide an. Der erste Freiflächenabschnitt beginnt daher in radialer Richtung betrachtet erst in einem mittleren Bereich der Hauptschneide. Der zweite Freiflächenabschnitt schließt sich daher allgemein zumindest unmittelbar an die Querschneide und vorzugsweise auch an einen zentrumsnahen Teilabschnitt der Hauptschneide unmittelbar an. Der erste Freiflächenabschnitt ist daher nur in einem radial äußeren Bereich, welcher beispielsweise die äußeren 50 bis 90 % der radialen Erstreckung der Hauptschneide bedeckt, ausgebildet.

Wie bereits zuvor erwähnt, ist eine der Entkopplung der Freiwinkel zwischen dem zentrumsnahen Bereich und dem zentrumsfernen Bereich ermöglicht. Zweckdienlicherweise ist daher auch vorgesehen, dass die Stirnfläche sich allgemein an die Hauptschneide unter einem Freiwinkel anschließt, welcher in einem zentrumsfernen Bereich kleiner ist als in einem zentrumsnahen Bereich der Stirnfläche. In dem zentrumsfernen Bereich wird der Freiwinkel dabei definiert durch den ersten Freiflächenabschnitt. Der durch den ersten Freiflächenabschnitt definierte erste Freiwinkel liegt dabei typischerweise im Bereich von beispielsweise 5 bis 10°.

Gemäß einer bevorzugten Weiterbildung weist der erste Freiflächenabschnitt in Umfangsrichtung dabei eine Breite auf, die in Richtung zum Schneideck hin zunimmt. Insgesamt weist dabei der erste Freiflächenabschnitt eine zum Zentrum hin spitz zulaufende Form auf.

Der erste Freiflächenabschnitt erstreckt sich weiterhin am äußeren Umfang im Bereich des Schneidecks in Drehrichtung über einen Winkel im Bereich von etwa 5 bis 20°. Diese vergleichsweise kurze Erstreckung in Umfangsrichtung ist dabei für die angestrebte verschleißreduzierende Wirkung ausreichend.

Zur Herstellung eines derartigen Bohrwerkzeugs werden wie bereits erwähnt erfindungsgemäß zwei Schleifscheiben mit unterschiedlicher Körnung eingesetzt, wobei die Schleifscheibe mit der feineren Körnung für den ersten Freiflächenabschnitt herangezogen wird. Mit der Schleifscheibe mit der gröberen Körnung wird zunächst die Stirngeometrie des Bohrwerkzeugs geschliffen. Anschließend wird in einem separaten Schleifschritt mit der zusätzlichen zweiten Schleifscheibe mit der feinen Körnung der erste Freiflächenabschnitt eingeschliffen.

### Beschreibung der Figuren

Ein Ausführungsbeispiel der Erfindung wird nachfolgend anhand der Figuren näher erläutert. Diese zeigen jeweils in vereinfachten Darstellungen:
- Fig. 1: eine Stirnansicht auf eine Bohrerstirn einer auswechselbaren Bohrerspitze, sowie
- Fig. 2: eine perspektivische Seitenansicht der in Fig. 1 dargestellten auswechselbaren Bohrerspitze.

### Beschreibung des Ausführungsbeispiels

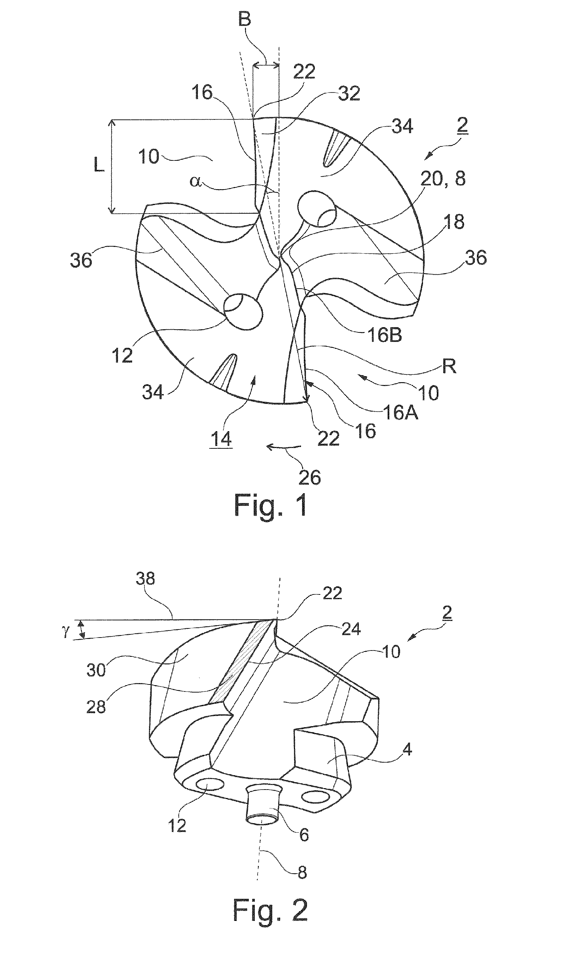

In den Fig. 1 und 2 ist beispielhaft eine austauschbare Bohrerspitze 2 dargestellt, die hier in nicht näher gezeigter Weise in einen genuteten Grundkörper zur Ausbildung eines modularen Bohrwerkzeugs einsetzbar ist. Die Bohrerspitze 2 umfasst hierzu einen Befestigungszapfen 4, mit dem sie in eine entsprechende Aufnahme des Grundkörpers klemmend und reversibel austauschbar einsetzbar ist. Über den Befestigungszapfen 4 erfolgt eine klemmende Befestigung sowie auch eine Drehmomentübertragung. An den Befestigungszapfen 4 schließt sich noch ein Einführzapfen 6 an.

Die Bohrerspitze 2 erstreckt sich entlang einer Längsachse 8, welche zugleich eine Rotationsachse definiert, um die die Bohrerspitze 2 während des Betriebs rotiert. Die Bohrerspitze 2 ist genutet ausgebildet und weist im Ausführungsbeispiel zwei Spannuten 10 auf, die im Grundkörper fortgeführt sind. Im Ausführungsbeispiel sind weiterhin Kühlmittelbohrungen 12 ausgebildet, welche die Bohrerspitze 2 in Längsrichtung durchsetzen und an einer frontseitigen Stirnfläche 14 austreten.

Die Bohrerspitze 2 umfasst zwei Hauptschneiden 16, die über eine Querschneide 18 miteinander verbunden sind. Im Ausführungsbeispiel verläuft die Querschneide 18 etwa S-förmig. Die Querschneide 18 kreuzt hierbei eine Zentrumsspitze 20, welche auf der Längsachse 8 liegt. Die Schneiden, also die Querschneide 18 sowie die Hauptschneiden 16 verlaufen von der Zentrumsspitze 20 bis zu einem äußeren Umfang der Bohrerspitze 2 durchgehend und stufenfrei entlang einer durch sie gebildeten Kante der Stirnfläche 14. Die Hauptschneiden 16 enden am äußeren Umfangsrand an einem Schneideck 22. Der Abstand von der Zentrumsspitze 20 zum Schneideck 22 definiert einen Nennradius R der Bohrerspitze 2. An das Schneideck 22 schließt sich umfangsseitig eine Nebenschneide 24 an, welche entlang der Spannut 10 verläuft. In Umfangsrichtung 26 schließt sich an die Nebenschneide 24 eine Stützfase 28 an. Zwischen den Spannuten 10 ist umfangsseitig ein Bohrrücken 30 ausgebildet. Die Umfangsrichtung 26 ist allgemein definiert durch den Verlauf eines Kreisbogens mit der Zentrumsspitze 20 als Kreiszentrum.

Die Stirnfläche 14 ist im Ausführungsbeispiel gebildet durch einen ersten Freiflächenabschnitt 32 sowie einen sich in Umfangsrichtung 26 daran anschließenden zweiten Freiflächenabschnitt 34. Schließlich ist in die Bohrerspitze 2 stirnseitig noch eine so genannte Ausspitzung 36 eingeschliffen, über die im Bereich der Zentrumsspitze 20 in an sich bekannter Weise Material abgetragen ist, sodass das Zentrum ausgedünnt ist.

Der erste Freiflächenabschnitt 32 ist bezüglich einer Horizontalebene 38 unter einem Freiwinkel γ orientiert, welcher im Bereich zwischen 5 und 10° liegt. Der zweite Freiflächenabschnitt 34 weist ebenfalls einen hier nicht näher dargestellten Freiwinkel γ auf, welcher etwas größer als der Freiwinkel γ des ersten Freiflächenabschnitts 32 ist. Die Längsachse 8 bildet das Lot zur Horizontalebene 38. Der erste Freiflächenabschnitt 32 beginnt im Ausführungsbeispiel beabstandet von der Zentrumsspitze 20 und erstreckt sich von dort bis zur Umfangsseite der Bohrspitze 2. Sie weist in Umfangsrichtung 26 eine Breite B auf, die in Richtung zur Umfangsseite, also zum Schneideck 22 zunimmt. Im Ausführungsbeispiel ist der erste Freiflächenabschnitt 32 in etwa dreieckförmig ausgebildet. Die Breite B am Schneideck 22 liegt dabei beispielsweise im Bereich von 10 bis 20 % des Nennradius R. Allgemein überdeckt der erste Freiflächenabschnitt 32 am Schneideck 22 einen Winkel α im Bereich von 5-20°.

Weiterhin weist der erste Freiflächenabschnitt 32 eine radiale Länge L auf, welche beispielsweise im Bereich von 50 bis 90 % des Nennradius R liegt. Der erste Freiflächenabschnitt 32 beginnt dabei innerhalb der Hauptschneide 16 beabstandet von dem Ende der Querschneide 18. Der erste Freiflächenabschnitt 32 ist daher nur in einem zentrumsfernen Teilabschnitt 16A der Hauptschneide ausgebildet. Gleichzeitig erstreckt sich der zweite Freiflächenabschnitt 34 im zentrumsnahen Bereich bis an die Querschneide 18 sowie im Ausführungsbeispiel auch bis an einen zentrumsnahen inneren Teilabschnitt 16B der Hauptschneide 16. In Umfangsrichtung 26 betrachtet geht der zweite Freiflächenabschnitt 34 im Ausführungsbeispiel rückseitig in die Ausspitzung 36 über, die quasi einen Übergang zur Spannut 10 darstellt.

Die beiden Hauptschneiden 16 sind zueinander unter einem Spitzenwinkel in etwa dachförmig zueinander orientiert. Der Spitzenwinkel liegt allgemein in einem Bereich zwischen 90 und 180 bzw. 179°. Vorzugsweise liegt er etwa im Bereich von 140°. Insgesamt ist dadurch die Stirnfläche 14 nach Art von Kegelmantelabschnitten gebildet.

Im Bereich des ersten Freiflächenabschnitts 32 ist der Spitzenwinkel im Vergleich zu einem inneren zentrumsnahen Bereich etwas erhöht, beispielsweise um 1 bis 5°, insbesondere um 1°. Die Stirnfläche 14 verläuft daher in einem äußeren Bereich, insbesondere im Bereich des ersten Freiflächenabschnitts 32, zum Schneideck 22 hin etwas flacher als in einem zentrumsnahen Bereich zur Zentrumsspitze 20 hin.

Zur Herstellung dieser Stirngeometrie mit den beiden Freiflächenabschnitten 32, 34 wird mit Hilfe einer ersten Schleifscheibe zunächst der zweite Freiflächenabschnitt 34 geschliffen. Anschließend wird der erste Freiflächenabschnitt 32 mit Hilfe einer zweiten Schleifscheibe geschliffen, die eine feinere Körnung aufweist als die Schleifscheibe für den zweiten Freiflächenabschnitt 34. Insgesamt wird dabei die Stirnfläche 14 derart geschliffen, dass der erste Freiflächenabschnitt 32 eine mittlere Rauheit Rₐ aufweist, welche geringer ist als die mittlere Rauheit Rₐ des zweiten Freiflächenabschnitts 34. Insbesondere liegt die Rauheit des ersten Freiflächenabschnitts 32 unter 0,1 µm. Die mittlere Rauheit Rₐ des zweiten Freiflächenabschnitts 34 liegt vorzugsweise oberhalb von 0,1 µm und insbesondere im Bereich zwischen 0,1 µm und 0,4 µm.

Unter mittlerer Rauheit wird allgemein ein arithmetisches Mittel der Abweichung eines Oberflächenpunktes von einer Mittellinie bezeichnet. Die Mittellinie schneidet dabei ein Oberflächenprofil der Stirnfläche 14 derart, dass die Summe aller Abweichungen des Oberflächenprofils auf die Mittellinie minimal ist.

Die Stirngeometrie wurde vorliegend im Zusammenhang mit der in den Figuren dargestellten Bohrerspitze 2 eines modularen Bohrwerkzeugs beschrieben. Bei der Bohrerspitze 2 handelt es sich um einen reversibel austauschbaren Hartmetall-Einsatz. Die hier beschriebene Stirngeometrie oder allgemein die spezielle Ausgestaltung des ersten Freiflächenabschnitts 32 mit der geringeren Rauheit im Vergleich zu dem zweiten Freiflächenabschnitt 34 lässt sich jedoch auch bei anderen Rotationswerkzeugen, insbesondere Bohrwerkzeugen, beispielsweise bei Vollhartmetallbohrern, einsetzen.

Unter Rotationswerkzeug wird allgemein ein Werkzeug zur zerspanenden Bearbeitung von Werkstücken verstanden, welche beim Bearbeitungsvorgang um eine Rotationsachse rotieren.

## Patentansprüche

1. Rotationswerkzeug, insbesondere Bohrwerkzeug, das sich entlang einer Längsachse (8) erstreckt, mit einer Stirnfläche (14), mit einer Zentrumsspitze (20), mit einer sich nach außen bis zu einem Schneideck (22) erstreckenden Hauptschneide (16), mit einem sich an die Hauptschneide (16) in einer Umfangsrichtung (26) anschließenden ersten Freiflächenabschnitt (32) und mit einem sich wiederum an diesen anschließenden zweiten Freiflächenabschnitt (34),
**dadurch gekennzeichnet,**
**dass** der erste Freiflächenabschnitt (32) eine geringere mittlere Rauheit als der zweite Freiflächenabschnitt (34) aufweist.

2. Rotationswerkzeug nach Anspruch 1,
**dadurch gekennzeichnet,**
**dass** die mittlere Rauheit Rₐ des ersten Freiflächenabschnitts (32) kleinergleich 0,1 µm ist.

3. Rotationswerkzeug nach Anspruch 1 oder 2,
**dadurch gekennzeichnet,**
**dass** die mittlere Rauheit Rₐ des zweiten Freiflächenabschnitts (34) im Bereich von größer 0,1 µm bis 0,4µm liegt.

4. Rotationswerkzeug nach einem der vorhergehenden Ansprüche,
**dadurch gekennzeichnet,**
**dass** der erste Freiflächenabschnitt (32) beabstandet von der Zentrumsspitze (20) beginnt.

5. Rotationswerkzeug nach einem der vorhergehenden Ansprüche,
**dadurch gekennzeichnet,**
**dass** der erste Freiflächenabschnitt (32) in radialer Richtung betrachtet beabstandet von einer Querschneide (18) sich an die Hauptschneide (16) anschließt.

6. Rotationswerkzeug nach einem der vorhergehenden Ansprüche,
**dadurch gekennzeichnet,**
**dass** die Stirnfläche (14) sich an die Hauptschneide (16) unter einem Freiwinkel (γ) anschließt, welcher in einem zentrumsfernen Bereich kleiner ist als in einem zentrumsnahen Bereich.

7. Rotationswerkzeug nach einem der vorhergehenden Ansprüche,
**dadurch gekennzeichnet,**
**dass** der erste Freiflächenabschnitt (32) in Umfangsrichtung (26) eine Breite (B) aufweist, die in Richtung zum Schneideck (22) zunimmt.

8. Rotationswerkzeug nach einem der vorhergehenden Ansprüche,
**dadurch gekennzeichnet,**
**dass** sich der erste Freiflächenabschnitt (32) am Schneideck (22) in Umfangsrichtung (26) über einen Winkel (α) im Bereich von 5 bis 20° erstreckt.

9. Verfahren zur Herstellung eines Rotationswerkzeuges, das sich entlang einer Längsachse (8) erstreckt, mit einer Stirnfläche (14), mit einer Zentrumsspitze (20), mit einer sich nach außen bis zu einem Schneideck (22) erstreckenden Hauptschneide (16), mit einem sich an die Hauptschneide (16) in einer Umfangsrichtung (26) anschließenden ersten Freiflächenabschnitt (32) und mit einem sich wiederum an diesen anschließenden zweiten Freiflächenabschnitt (34),
**dadurch gekennzeichnet,**
**dass** die beiden Freiflächenabschnitte (32, 34) mit unterschiedlichen Schleifscheiben geschliffen werden.

10. Verfahren nach Anspruch 9,
**dadurch gekennzeichnet,**
**dass** die Schleifscheiben eine unterschiedliche Körnung aufweisen.

11. Verfahren nach Anspruch 9 oder 10,
**dadurch gekennzeichnet,**
**dass** zunächst der zweite Freiflächenabschnitt (34) und nachfolgend der erste Freiflächenabschnitt (32) geschliffen wird.
